# EUROPEAN PATENT SPECIFICATION

(11) **EP 3 264 069 B1**
(45) Date of publication and mention of the grant of the patent: **22.05.2019**
(21) Application number: 16755681.0
(22) Date of filing: 26.02.2016
(51) Int. Cl.: G01N 21/64, G01N 21/01, G02B 21/06, G02B 21/00, G01N 21/65, G02B 21/10, G02B 21/16

(54) **TOTAL INTERNAL REFLECTION SAMPLE ILLUMINATING DEVICE**
VORRICHTUNG ZUR BELEUCHTUNG EINER PROBE MIT TOTALER INTERNER REFLEKTION
DISPOSITIF D'ÉCLAIRAGE D'ÉCHANTILLON À RÉFLEXION INTERNE TOTALE

(30) Priority: 27.02.2015 JP 2015038153
(43) Date of publication of application: 03.01.2018
(73) Proprietor: Keio University, Tokyo 108-8345 (JP); Niigata Co., Ltd., Yokohama-shi, Kanagawa 230-0071 (JP)
(72) Inventor: SATO, Yohei, Kanagawa 223-8522 (JP); URUSHIDANI, Maho, Kanagawa 223-8522 (JP); MAKINO, Shusuke, Kanagawa 230-0071 (JP)
(74) Representative: Schäfer, Matthias W.
(86) International application number: PCT/JP2016/055789
(87) International publication number: WO 2016/136937

(56) References cited:
- WO-A1-94/00761
- WO-A1-2007/034796
- WO-A1-2009/066515
- WO-A2-03/087914
- CN-A- 102 323 218
- DE-A1-102005 040 833
- JP-A- 2006 153 643
- JP-A- 2008 309 785
- JP-A- 2012 117 837
- US-A- 5 442 169
- US-A1- 2009 052 021
- BRUNS T ET AL: "TIR fluorescence screening of cell membranes", PROCEEDINGS OPTICAL DIAGNOSTICS OF LIVING CELLS II, vol. 5699, 11 April 2005 (2005-04-11), page 40, XP055392428, US ISSN: 0277-786X, DOI: 10.1117/12.590199 ISBN: 978-1-5106-1723-0
- AXELROD D ET AL: "TOTAL INTERNAL REFLECTION FLUORESCENCE", ANNUAL REVIEW OF BIOPHYSICS AND BIOENGINEER, ANNUAL REVIEWS INC., PALO ALTO, CA, US, vol. 13, 1984, pages 247-268, XP009046174, ISSN: 0883-9182, DOI: 10.1146/ANNUREV.BB.13.060184.001335

## Description

### TECHNICAL FIELD

The present invention relates to a total internal reflection sample illuminating device, which is configured to generate an evanescent wave as excitation light in fluorescence observation with a microscope and measurement using totally internally reflected Raman scattered light, for example.

### BACKGROUND ART

As a method of observing and measuring only the close vicinity of an interface of a sample, there has been known fluorescence observation using an evanescent wave as local excitation light. The evanescent wave is light that seeps out, when light enters an interface between two substances having different refractive indices from the side of the substance having the larger refractive index at a critical angle or more, and is totally internally reflected by the interface, to the side of the substance having the smaller refractive index. The evanescent wave has an intensity that decays exponentially as travelling away from the total internal reflection interface. Therefore, in the fluorescence observation using such evanescent wave, a fluorescent dye that exists at a distance of about 100 nm from the total internal reflection interface can be selectively excited, and observation and measurement specialized only in a shallow region in the close vicinity of the interface can be achieved.

In the related art, as a total internal reflection sample illuminating device configured to perform irradiation with the evanescent wave, there has been known a total internal reflection sample illuminating device disclosed in Patent Literature 1. This device includes an incident prism, which is fixed to a laser light source, and a radiation prism, which is supported to be adjustable in position in a direction of approaching the incident prism. The device is configured to support both ends of a slide glass, on which a sample is placed, from below by the incident prism and the radiation prism described above. Laser light emitted from the laser light source is guided into the slide glass through a contact surface between the incident prism and the slide glass, and after being repeatedly and totally internally reflected in the slide glass a plurality of times, is guided into the radiation prism from the contact surface between the slide glass and the radiation prism to be emitted from the radiation prism to the outside.

When the laser light is totally internally reflected in the slide glass, evanescent waves are generated at a front surface of the slide glass to correspond to positions at which the laser light is totally internally reflected. The fluorescent dye in the sample is excited by being irradiated with the evanescent waves only in the close vicinity of the front surface of the slide glass, and the excitation light can be observed with an objective lens arranged below the slide glass.

Moreover, in recent years, there has also been proposed a technology of non-invasively measuring the vicinity of the interface by capturing the totally internally reflected Raman scattered light generated from the sample using the evanescent wave as the excitation light and without using the fluorescent dye (Non Patent Literature 1), and application of the total internal reflection sample illuminating device, which is configured to generate the evanescent wave, is expected in a variety of fields, such as biology, medicine, and environment.

### CITATION LIST

### PATENT LITERATURE

[PTL 1] JP 2007-85915 A

### Non Patent LITERATURE

[NPL 1] Kuriyama. R, Tateishi. T, Sato. Y, "Development of Total Internal Reflection Raman Imaging for Non-intrusive Quantitative Visualization of Near-wall Concentration", 17th International Symposium on Applications of Laser Techniques to Fluid Mechanics, 2014
US 2009/052021 A discloses an inspection systems using a known total internal reflection illuminator. WO 03/087914 A2 discloses an incident illumination array for a microscope. CN 102 323 218 A discloses a material real-time monitoring device based on spectrum technology.

### DISCLOSURE OF THE INVENTION

### PROBLEMS TO BE SOLVED BY THE INVENTION

However, with such total internal reflection illuminating device in the related art, when an angle of incidence of the laser light that enters the slide glass through the incident prism is different by 1°, a magnitude and an intensity of the evanescent wave generated at the front surface of the slide glass are changed, and hence skill in the art has been required for adjusting a positional relationship between the laser light source and the incident prism. Moreover, unless a position of the radiation prism is optimally adjusted, the laser light radiated from the radiation prism to the outside generates scattered light, and the scattered light becomes a factor in a reduction of an SN ratio during the observation and measurement. In addition, when the positional relationship between the laser light source and the incident prism is adjusted, adjustment of the position of the radiation prism is also required accordingly, and there has been a problem in that handling of the device has been troublesome.

### MEANS FOR SOLVING THE PROBLEMS

The present invention has been made in view of the above-mentioned problems, and therefore has an object to provide a total internal reflection sample illuminating device according to claim 1, which is capable of generating an evanescent wave easily only through inputting laser light without skill in the art, and which is easy to handle in performing observation and measurement.

That is, according to the present invention, there is provided a total internal reflection sample illuminating device, which is configured to introduce laser light into a slide glass such that the laser light undergoes multiple total internal reflections in the slide glass to generate an evanescent wave at a top surface of the slide glass, and to illuminate a sample, which is positioned on the top surface of the slide glass, with the evanescent wave, the total internal reflection sample illuminating device including a device substrate, which is formed of a material having a refractive index at the same level as a refractive index of the slide glass.

An opening is formed to pierce between a top surface and a bottom surface of the device substrate, and the slide glass can be placed on the top surface so as to block the opening. Moreover, a light source holder, which is configured to hold a laser light source, is fixed to the top surface of the device substrate, and to allow laser light emitted by the laser light source to enter the top surface of the device substrate at a predetermined angle. An incident reflecting surface is formed on the bottom surface side of the device substrate. The laser light that has entered the device substrate from the laser light source is reflected by the incident reflecting surface to enter the slide glass, and to undergo multiple total internal reflections in an area of the slide glass that overlaps the opening. As a result, the evanescent wave is generated at a front surface of the slide glass to correspond to the area in which the laser light is totally internally reflected, and the sample on the slide glass can be illuminated with the evanescent wave. Meanwhile, on the bottom surface side of the device substrate, an exit reflecting surface is formed in an area opposed to the incident reflecting surface across the opening. This exit reflecting surface is configured to reflect the laser light that has entered the device substrate from the slide glass in a direction that is parallel to the top surface of the device main body and that does not interfere with the opening, and to emit the laser light to the outside of the device substrate.

According to the present invention described above, the incident reflecting surface is formed on the device substrate, and the light source holder, which is configured to hold the laser light source, is fixed to the device substrate. Therefore, the angle of incidence of a laser beam with respect to the incident reflecting surface is always constant, and with the slide glass being placed on the device substrate, the relationship between the slide glass and the incident reflecting surface also is constant. Further, for the device substrate, there is used a material having a refractive index at the same level as that of the slide glass. Therefore, there is almost no need to consider refraction of the laser light at a boundary surface between the slide glass and the device substrate, and the total internal reflection of the laser light in the slide glass occurs only at the front surface of the slide glass, on which the sample is placed, and a back surface of the slide glass facing the opening. As a result, only through setting, to the device substrate, the slide glass and the light source holder holding the laser light source, the angle of incidence of the laser light with respect to the slide glass becomes always constant, and the evanescent wave can be stably generated only in the area in which the slide glass overlaps the opening of the device substrate. In addition, the evanescent wave can be generated easily with no need for troublesome adjustment operations.

Moreover, the laser light that has entered the device substrate from the slide glass after the evanescent wave is generated is reflected by the exit reflecting surface, which is formed on the device substrate, in a direction that is parallel to the front surface of the device substrate and that does not interfere with the opening, and is then emitted from the device substrate. As a result, scattered light is not generated by the laser light being reflected by the objective lens, which is located below a stage of a microscope or the like, a revolving nosepiece for the objective lens, and other such devices, and good observation and measurement with a high S/N ratio can be performed.

As long as having the opening, which induces the total internal reflection of the laser light, substantially at the center and being formed into a plate shape, the device substrate may have any external shape. However, from a viewpoint of facilitating formation of the incident reflecting surface and the exit reflecting surface, it is preferred that the device substrate be formed into a rectangular shape. With the device substrate being formed into the rectangular shape, the incident reflecting surface and the exit reflecting surface can be formed in a pair of corner portions across the opening by cutting off the corner portions obliquely.

Moreover, the total internal reflection sample illuminating device according to the present invention is used by being placed on a stage of an inverted microscope or a stage of various kinds of measurement hardware, for example. However, from a viewpoint of making the device easily fixable to the stage for the use, it is preferred to form a support plate portion, which is to be placed on the stage, on a periphery of the top surface side of the device substrate, and to form a boss, which is used to position the device substrate in a hole in the stage, on a back surface side of the support plate portion. With this configuration, only through placing the device according to the present invention on the stage, the objective lens of the microscope can be positioned with respect to the opening of the device substrate, for example, and the observation using the evanescent wave can be started easily.

As a material of the device substrate, a material having a refractive index at the same level as that of the slide glass, having high transparency, and not showing autofluorescence is preferred, and a plate material made of a clear colorless acrylic resin (hereinafter referred to as "acrylic board") may be used, for example. In that case, the incident reflecting surface and the exit reflecting surface may be formed by directly evaporating a metallic thin film onto the acrylic board for forming the device substrate. However, an acrylic board having one surface onto which a metallic thin film is evaporated (hereinafter referred to as "acrylic mirror board") is commercially available, and hence the device substrate may be formed by bonding the acrylic mirror board to a clear colorless acrylic board. In this manner, the device substrate may be produced inexpensively.

### BRIEF DESCRIPTION OF DRAWINGS

FIG. 1 is a schematic view for illustrating an example of a total internal reflection sample illuminating device to which an embodiment of the present invention is applied.
FIG. 2 is a bottom view for illustrating the total internal reflection sample illuminating device according to the embodiment.
FIG. 3 is a front view for illustrating the total internal reflection sample illuminating device according to the embodiment.
FIG. 4 is a back view for illustrating the total internal reflection sample illuminating device according to the embodiment.
FIG. 5 is a plan view for illustrating the total internal reflection sample illuminating device according to the embodiment.
FIG. 6 is a side view for illustrating a light source holder of the total internal reflection sample illuminating device according to the embodiment.

### MODE FOR CARRYING OUT THE INVENTION

Now, with reference to the accompanying drawings, description is made of a total internal reflection sample illuminating device to which an embodiment of the present invention is applied.

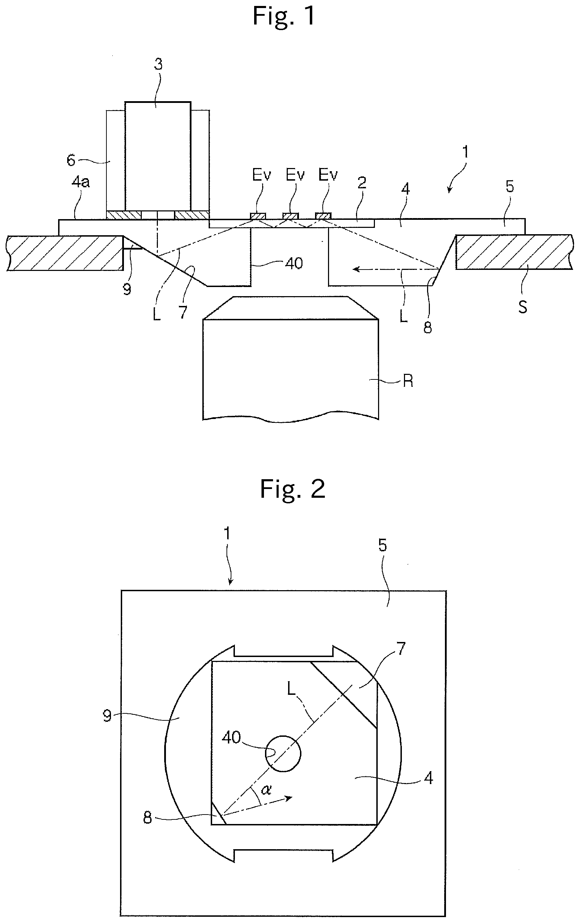

FIG. 1 is a cross-sectional view for schematically illustrating a total internal reflection sample illuminating device (hereinafter referred to as "illuminating device") to which the present invention is applied. This illuminating device 1 is used by being placed on a stage S of an inverted fluorescence microscope, for example, and when a slide glass 2 is set at a predetermined position of the illuminating device 1, and laser light L is emitted from a laser light source 3 fixed to the illuminating device 1, an evanescent wave Ev is generated at a predetermined position of a front surface of the slide glass 2. Therefore, when the slide glass 2, on which a sample containing a fluorescent dye is placed, is set to the illuminating device 1, the fluorescent dye in the sample is excited with the evanescent wave Ev that has seeped out on the front surface of the slide glass 2, and fluorescence observation may be performed on the sample with an objective lens R from below the microscope stage S through the slide glass 2.

The illuminating device 1 includes a device substrate 4, which is arranged in a hole in the microscope stage S, and which has an opening 40 for the objective lens R substantially at the center, a support plate portion 5, which extends on a periphery of the top surface side of the device substrate 4 to be overlaid on the microscope stage S, and a light source holder 6, which is fixed to a top surface 4a of the device substrate 4 to hold the laser light source 3. Moreover, the device substrate 4 has formed thereon an incident reflecting surface 7, which is configured to reflect, toward the slide glass 2, the laser light L that has entered the device substrate 4 from the laser light source 3, and an exit reflecting surface 8, which is configured to reflect the laser light L that has entered the device substrate 4 from the slide glass 2, and to emit the laser light L from the device substrate 4 to the outside.

The support plate portion 5 and the device substrate 4 are formed integrally, and the light source holder 6 is fixed to the top surface of the device substrate 4 with screws. Moreover, on a lower surface side of the support plate portion 5 on the periphery of the device substrate 4, a boss 9 to be fitted into the hole in the microscope stage S is formed. When the support plate portion 5 is placed on the microscope stage S such that the boss 9 is fitted into the hole, the opening 40 formed in the device substrate 4 is positioned at the center of the hole in the microscope stage S, and the objective lens R of the microscope is positioned in the opening 40.

The device substrate 4 needs to be formed of a material having a refractive index at the same level as that of the slide glass 2, having high transparency, and not showing autofluorescence for a wavelength of the laser light L to be used, and the same material as that of the slide glass 2 for observation may be used, for example. In this embodiment, there is used an acrylic board, which is easily processed, for example, cut or bonded, and which is available inexpensively as compared to a glass plate.

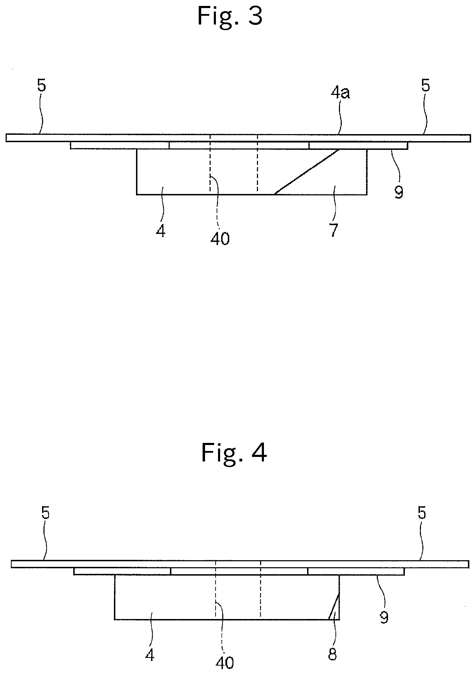

FIG. 2 to FIG. 4 are a bottom view, a front view, and a back view for illustrating details of a shape of the illuminating device 1, respectively. In FIG. 2 to FIG. 4, there is illustrated a state in which the light source holder 6 is removed from the device substrate 4. The support plate portion 5 is formed into a quadrangular shape, and has a bottom surface in which the boss 9 is formed into a substantially circular shape at the center. A shape of the boss 9 matches a shape of the hole in the microscope stage S, and is different for a manufacturer of the microscope. Moreover, on a bottom surface of the boss 9, the device substrate 4 projects into a substantially rectangular shape. The opening 40 is located at the center of the boss 9 to pierce between the top surface and the bottom surface of the device substrate 4, but exists at a position slightly deviated from the center of the device substrate 4.

There are four corner portions on the bottom surface side of the device substrate 4, which is formed into the rectangular shape, and on two corner portions located diagonally across the opening 40, the incident reflecting surface 7 and the exit reflecting surface 8 are located. The incident reflecting surface 7 and the exit reflecting surface 8 are formed as inclined surfaces obtained by cutting off the corner portions on the bottom surface side of the device substrate 4 obliquely at a predetermined angle, and may be formed by evaporating a metallic thin film made of aluminum or the like onto the inclined surfaces.

In the illuminating device 1 according to the present invention that was actually produced by the inventors of the present invention, in order to suppress production cost, a commercially available acrylic mirror board was used for the incident reflecting surface 7 and the exit reflecting surface 8, and the acrylic mirror board was bonded to the above-mentioned acrylic board, to thereby form the incident reflecting surface 7 and the exit reflecting surface 8 on the device substrate 4. The support plate portion 5, the boss 9, and the device substrate 4 were also formed into a predetermined shape by bonding acrylic boards having different thicknesses. Bonded surfaces were mirror-polished, and a UV-curable resin was used as an adhesive to prevent minute cracks and air bubbles from being incorporated between the surfaces of the acrylic boards during bonding. Moreover, a surface roughness of a surface on the periphery of the device substrate 4, which is formed into the substantially rectangular shape, was designed to be Rₐ₌0.05 or less.

As illustrated in the plan view of FIG. 2, the incident reflecting surface 7 reflects the laser light L that has entered from the top surface of the device substrate 4 toward a center direction of the opening 40, and the exit reflecting surface 8 exists beyond the opening 40. In reality, the laser light L does not travel straight from the incident reflecting surface 7 to the exit reflecting surface 8, but as illustrated in FIG. 1, enters the slide glass 2 obliquely from below, passes through the slide glass 2 while being repeatedly and totally internally reflected, and then enters the exit reflecting surface 8. The exit reflecting surface 8 reflects the laser light L vertically in a direction that is parallel to the top surface of the device substrate 4 as illustrated in FIG. 1, but reflects the laser light L horizontally not back in a direction of the incident reflecting surface 7, but in a direction in which an angle α is formed with the incident laser light L as illustrated in FIG. 2. As a result, the laser light L is prevented from interfering with the opening 40 for the objective lens R.

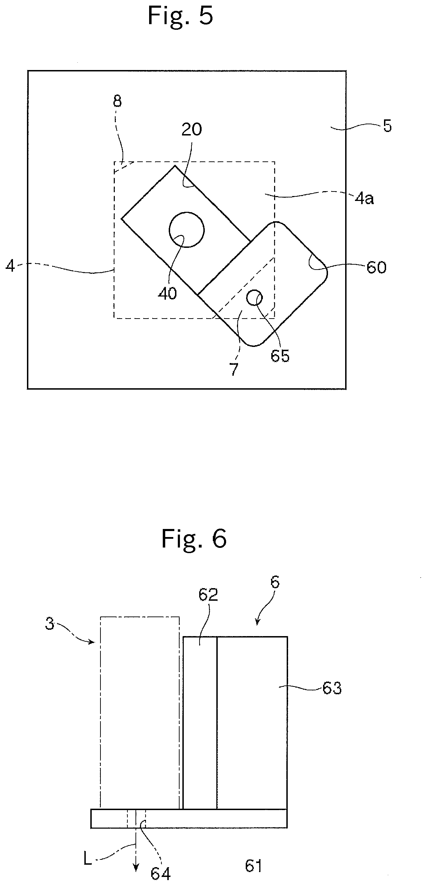

FIG. 5 is a plan view of the illuminating device 1. In FIG. 5, there is illustrated a state in which the light source holder 6 is removed. At the center of the top surface 4a of the device substrate 4, a recess 20 for positioning the slide glass 2 is formed, and the opening 40 is opened at the center of the recess 20. When the slide glass 2 is placed in the recess 20, refractive index matching liquid, for example, oil for oil immersion may be applied by drops between the slide glass 2 and the device substrate 4. Moreover, a holder fixing seat 60 is formed adjacent to the recess in the top surface 4a of the device substrate, and the light source holder 6 is screwed onto the holder fixing seat 60. This holder fixing seat 60 is located immediately above the incident reflecting surface 7 formed on the device substrate 4, and when the laser light source 3 is held by the light source holder 6, the laser light L emitted from the laser light source 3 perpendicularly enters the top surface of the device substrate 4 such that the laser light L enters the incident reflecting surface 7 at a certain angle.

The illuminating device 1 according to the present invention that was actually produced was formed by bonding the acrylic board for forming the device substrate 4 to the acrylic board for forming the support plate portion 5, and hence an introduction hole 65, which has a depth corresponding to a thickness of the acrylic board for forming the support plate portion 5, is formed in the holder fixing seat 60 such that the laser light L emitted from the laser light source 3 enters the device substrate 4 through the introduction hole 65. Therefore, when the support plate portion 5 and the device substrate 4 are formed of a single acrylic board, there is no need to form the introduction hole 65.

FIG. 6 is a schematic view of the light source holder 6. This light source holder 6 includes a base portion 61, which is screwed onto the holder fixing seat 60, a light source holding portion 62, which is vertically erected from the base portion 61, and heat-radiating fins 63, which are formed integrally with the base portion 61 and the light source holding portion 62. A plurality of the heat-radiating fins 63 are arrayed along the paper depth direction of FIG. 6. The laser light source 3 is fixed to the light source holding portion 62 such that the laser light L emitted thereby passes through a through hole 64, which is formed in the base portion 61, to enter the device substrate 4. Moreover, in order to prevent the laser light source 3 from overheating while emitting the laser light L, and the heat from being conducted to the device substrate 4, the light source holder 6 is formed of a metal having good thermal conductivity, for example, aluminum, and the heat generated by the laser light source 3 is radiated into surrounding atmosphere by the heat-radiating fins 63.

In the illuminating device configured as described above, as illustrated in FIG. 1, the laser light L emitted from the laser light source 3 is reflected by the incident reflecting surface 7 to enter the slide glass 2 at a predetermined angle, and is repeatedly and totally internally reflected in the slide glass 2 a plurality of times. With the device substrate 4 being formed of the material having the refractive index at the same level as that of the slide glass 2, the laser light L passes through an interface between the slide glass 2 and the device substrate 4 while being hardly refracted. After being totally internally reflected at the front surface of the slide glass 2, the laser light L is totally internally reflected also on a back surface side of the slide glass 2 overlapping the opening 40. Then, the laser light L is repeatedly and totally internally reflected in the slide glass 2 in the area in which the slide glass 2 overlaps the opening 40. When arriving at a portion in which the slide glass 2 and the device substrate 4 overlap, the laser light L passes through the interface between the slide glass 2 and the device substrate 4 to enter the device substrate 4.

Therefore, when the laser light source 3 is held at a predetermined posture by the light source holder 6 fixed to the device substrate 4, and the laser light L is input to the incident reflecting surface 7 of the device substrate 4 at a predetermined angle, multiple total internal reflections naturally occur in the slide glass 2, and the evanescent wave Ev is generated at the area of the front surface of the slide glass 2 in which the total internal reflections occur. As a result, the evanescent wave can be generated easily and stably with no need for troublesome adjustment operations.

Meanwhile, the laser light that has entered the device substrate from the slide glass enters the exit reflecting surface, is reflected in the direction that is parallel to the top surface of the device substrate and that does not interfere with the opening, and then is emitted from peripheral surfaces of the device substrate. Equipment of the microscope, such as the objective lens and a revolving nosepiece for the objective lens exist below the microscope stage S, but when the laser light is emitted in the direction parallel to the top surface of the device substrate, in other words, a direction parallel to a front surface of the microscope stage as described above, the laser light can be prevented from being reflected by the equipment below the microscope stage and from generating scattered light, which is hard to predict. As a result, good fluorescence observation with a high S/N ratio can be performed.

As described above, when the total internal reflection sample illuminating device according to the present invention is placed on the stage of the microscope, the evanescent wave can be generated easily and stably, and the observation of an object by a total internal reflection fluorescence microscope using the evanescent wave is facilitated. The total internal reflection sample illuminating device is therefore expected to become popular in a variety of fields, such as biology, medicine, and environment.

Moreover, the total internal reflection sample illuminating device according to the present invention, which generates the evanescent wave easily and stably, is also effective in measurement using totally internally reflected Raman scattered light with the evanescent wave being excitation light, and the measurement enables non-invasive measurement in the vicinity of the interface. As a result, the total internal reflection sample illuminating device is expected to be used in the variety of fields, such as biology, medicine, and environment.

## Claims

1. A total internal reflection sample illuminating device (1), which is configured to introduce laser light into a slide glass (2) such that the laser light undergoes multiple total internal reflections in the slide glass (2) to generate an evanescent wave at a top surface of the slide glass (2), and to illuminate a sample, which is positioned on the top surface of the slide glass (2), with the evanescent wave, the total internal reflection sample illuminating device (1) comprising:
a slide glass (2);
a laser light source (3);
a device substrate (4), which has an opening (40) formed to pierce between a top surface and a bottom surface of the device substrate (4), and has the slide glass (2) placed on the top surface so as to block the opening, the device substrate (4) being formed of a material having a refractive index at the same level as a refractive index of the slide glass (2) such that the total internal reflection of the laser light in the slide glass (2) occurs only at the front surface of the slide glass (2) on which the sample is placed, and a back surface of the slide glass (2) facing the opening (40);
a light source holder (6) to hold the laser light source (3), and which is configured to allow laser light emitted by the laser light source (3) to enter the top surface of the device substrate (4) at a predetermined angle;
an incident reflecting surface (7), which is formed on the bottom surface side of the device substrate (4), and which is configured to reflect the laser light that has entered the device substrate (4) from the laser light source (3) such that the laser light enters the slide glass (2) and undergoes multiple total internal reflections in an area of the slide glass (2) that overlaps the opening (40); and
an exit reflecting surface (8), which is formed on the bottom surface side of the device substrate (4), and in an area opposed to the incident reflecting surface (7) across the opening (40);
the total internal reflection sample illumination device (1) being **characterized in that** the light source holder (6) is fixed to the top surface of the device substrate (4), and **in that** the exit reflecting surface (8) is configured to reflect the laser light that has entered the device substrate (4) from the slide glass (2) in a direction that is parallel to the top surface of the device substrate (4) and that does not intersect with the opening (40).

2. The total internal reflection sample illuminating device (1) according to claim 1, wherein the device substrate (4) is formed into a rectangular shape, and the incident reflecting surface (7) and the exit reflecting surface (8) are formed in a pair of corner portions across the opening (40).

3. The total internal reflection sample illuminating device (1) according to claim 1 or 2, further comprising:
a support plate portion (5), which is formed on a periphery of the top surface side of the device substrate (4), and which is intended to be placed on an observation stage of an inverted microscope or of a measurement hardware; and
a boss (9), which is formed on the support plate portion (5) to position the device substrate (4) in a hole in an observation stage.

4. The total internal reflection sample illuminating device (1) according to any one of claims 1 to 3, wherein the device substrate (4) is formed by bonding an acrylic board, onto which a metallic thin film is evaporated, and which is to form the incident reflecting surface (7) and the exit reflecting surface (8), to another clear colorless acrylic board.

5. The total internal reflection sample illuminating device (1) according to any one of claims 1 to 4, where the refractive index of the material forming the device substrate (4) is the same as the refractive index of the slide glass (2).

## Patentansprüche

1. Vorrichtung (1) zur Beleuchtung einer Probe mit totaler interner Reflexion, welche dafür ausgelegt ist, Laserlicht in einen Glasträger (2) einzubringen, so dass das Laserlicht mehrere totale interne Reflexionen in dem Glasträger (2) durchläuft, um eine abklingende Welle an einer oberen Fläche des Glasträgers (2) zu erzeugen, und um eine Probe, welche auf der oberen Fläche des Glasträgers (2) positioniert ist, mit der abklingenden Welle zu beleuchten, wobei die Vorrichtung (1) zur Beleuchtung einer Probe mit totaler interner Reflexion aufweist:
einen Glasträger (2);
eine Laserlichtquelle (3);
ein Vorrichtungssubstrat (4), welches eine Öffnung (40) aufweist, welche ausgebildet ist, um zwischen einer oberen Fläche und einer unteren Fläche des Vorrichtungssubstrats (4) durchzudringen, und den auf der oberen Fläche platzierten Glasträger aufweist, um die Öffnung zu blockieren, wobei das Vorrichtungssubstrat (4) aus einem Material mit einem Brechungsindex in der gleichen Höhe wie ein Brechungsindex des Glasträgers (2) gebildet ist, so dass die totale interne Reflexion des Laserlichts in dem Glasträger (2) nur an der vorderen Fläche des Glasträgers (2), auf welcher die Probe platziert ist, und einer der Öffnung (40) zugewandten hinteren Fläche des Glasträgers (2) auftritt;
einen Lichtquellenhalter (6), um die Laserlichtquelle (3) zu halten, und welcher dafür ausgelegt ist, um es durch die Laserlichtquelle (3) ausgesendetem Laserlicht zu ermöglichen, in die obere Fläche des Vorrichtungssubstrats (4) unter einem vorgegebenen Winkel einzudringen;
eine reflektierende Einfallsfläche (7), welche an der unteren Seitenfläche des Vorrichtungssubstrats (4) ausgebildet ist, und welche dafür ausgelegt ist, um das Laserlicht, welches in das Vorrichtungssubstrat (4) von der Laserlichtquelle (3) eingedrungen ist, zu reflektieren, so dass das Laserlicht in den Glasträger (2) eindringt und mehrere totale interne Reflexionen in einem Bereich des Glasträgers (2) durchläuft, welcher die Öffnung (40) überlappt; und
eine reflektierende Ausfallsfläche (8), welche an der unteren Seitenfläche des Vorrichtungssubstrats (4) und in einem der reflektierenden Einfallsfläche (7) quer über die Öffnung (40) hinweg gegenüber liegenden Bereich ausgebildet ist;
wobei die Vorrichtung (1) zur Beleuchtung einer Probe mit totaler interner Reflexion **dadurch gekennzeichnet ist, dass** der Lichtquellenhalter (6) an der oberen Fläche des Vorrichtungssubstrats (4) befestigt ist, und dass die reflektierende Ausfallsfläche (8) dafür ausgelegt ist, um das Laserlicht, welches von dem Glasträger (2) in das Vorrichtungssubstrat (4) eindringt und welches sich nicht mit der Öffnung (40) schneidet, in einer Richtung parallel zu der oberen Fläche des Vorrichtungssubstrats (4) zu reflektieren.

2. Vorrichtung (1) zur Beleuchtung einer Probe mit totaler interner Reflexion nach Anspruch 1, wobei das Vorrichtungssubstrat (4) in einer rechteckigen Form ausgebildet ist und die reflektierende Einfallsfläche (7) und die reflektierende Ausfallsfläche (8) in einem Paar Eckabschnitten quer über die Öffnung (40) hinweg ausgebildet sind.

3. Vorrichtung (1) zur Beleuchtung einer Probe mit totaler interner Reflexion nach Anspruch 1, ferner aufweisend:
einen Trägerplattenabschnitt (5), welcher an einem Umfang der oberen Seitenfläche des Vorrichtungssubstrats (4) ausgebildet ist, und welcher dafür vorgesehen ist, auf einer Beobachtungsplattform eines inversen Mikroskops oder einer Messhardware platziert zu werden; und
einen Buckel (9), welcher auf dem Trägerplattenabschnitt (5) ausgebildet ist, um das Vorrichtungssubstrat (4) in einem Loch in einer Beobachtungsplattform zu positionieren.

4. Vorrichtung (1) zur Beleuchtung einer Probe mit totaler interner Reflexion nach einem der Ansprüche 1 bis 3, wobei das Vorrichtungssubstrat (4) durch Verkleben einer Acrylplatte, auf welcher ein dünner Metallfilm aufgedampft ist, und welcher die reflektierende Einfallsfläche (7) und die reflektierende Ausfallsfläche (8) bilden soll, an einer anderen klaren, farblosen Acrylplatte gebildet ist.

5. Vorrichtung (1) zur Beleuchtung einer Probe mit totaler interner Reflexion nach einem der Ansprüche 1 bis 4, wobei der Brechungsindex des Materials, welches das Vorrichtungssubstrat (4) bildet, der gleiche wie der Brechungsindex des Glasträgers (2) ist.

## Revendications

1. Un dispositif d'éclairage d'échantillon à réflexion interne totale (1), qui est configuré pour faire pénétrer une lumière laser dans une lame de verre (2) de sorte que la lumière laser soit soumise à de multiples réflexions internes totales dans la lame de verre (2) pour générer une onde évanescente à une surface supérieure de la lame de verre (2), et pour éclairer un échantillon, disposé sur la surface supérieure de la lame de verre (2), avec l' onde évanescente, le dispositif d'éclairage d'échantillon à réflexion interne totale (1) comprenant :
une lame de verre (2) ;
une source de lumière laser (3) ;
un substrat de dispositif (4), qui présente une ouverture (40) formée pour percer à travers une surface supérieure et une surface inférieure du substrat de dispositif (4), et qui se **caractérise par le fait que** la lame de verre (2) est placée sur la surface supérieure de sorte à bloquer l'ouverture, le substrat de dispositif (4) étant constitué d'un matériau présentant un indice de réflexion du même niveau que l'indice de réflexion de la lame de verre (2) de sorte que la réflexion interne totale de la lumière laser dans la lame de verre (2) se produise uniquement sur la surface avant de la lame de verre (2) sur laquelle l'échantillon est placé, et une surface arrière de la lame de verre (2) faisant face à l'ouverture (40) ;
un support de source lumineuse (6) pour maintenir la source de lumière laser (3), et qui est configuré de sorte à permettre à la lumière laser émise par la source de lumière laser (3) d'entrer dans la surface supérieure du substrat de dispositif (4) à un angle prédéterminé ;
une surface de réflexion de l'incidence (7) formée sur le côté de la surface inférieure du substrat de dispositif (4), et qui est configurée pour réfléchir la lumière laser qui a pénétré dans le substrat de dispositif (4) de la source de lumière laser (3) de sorte que la lumière laser pénètre dans la lame de verre (2) et soit soumise à de multiples réflexions internes totales dans une zone de la lame de verre (2) qui empiète sur l'ouverture (40) ; et
une surface de réflexion de sortie (8), qui est formée sur le côté de la surface inférieure du substrat de dispositif (4), et dans une zone opposée par rapport à la surface de réflexion de l'incidence (7) à travers l'ouverture (40) ;
le dispositif d'éclairage d'échantillon à réflexion interne totale (1) étant **caractérisé en ce que** le support de source lumineuse (6) est fixé à la surface supérieure du substrat de dispositif (4), et **en ce que** la surface de réflexion de sortie (8) est configurée pour réfléchir la lumière laser qui a pénétré dans le substrat de dispositif (4) de la lame de verre (2) dans une direction parallèle à la surface supérieure du substrat de dispositif (4) et qui ne recoupe pas l'ouverture (40).

2. Le dispositif d'éclairage d'échantillon à réflexion interne totale (1) selon la Revendication 1, étant précisé que le substrat de dispositif (4) est formé de sorte à présenter une forme rectangulaire, et la surface de réflexion de l'incidence (7) et la surface de réflexion de sortie (8) sont formées dans une paire de section de coin dans l'ouverture (40).

3. Le dispositif d'éclairage d'échantillon à réflexion interne totale (1) selon la Revendication 1 ou 2, comprenant en outre :
une section de plaque de support (5) formé à une périphérie du côté de la surface supérieure du substrat de dispositif (4) et qui est prévue pour être placée sur une platine d'observation d'un microscope inversé ou d'un appareil de mesure ; et
un bossage (9) réalisé sur la section de plaque de support (5) pour positionner le substrat de dispositif (4) dans un trou dans une platine d'observation.

4. Le dispositif d'éclairage d'échantillon à réflexion interne totale (1) selon l'une quelconque des Revendications 1 à 3, étant précisé que le substrat de dispositif (4) est obtenu en collant une plaque acrylique, sur laquelle un film fin métallique est vaporisé, et qui doit former la surface de réflexion de l'incidence (7) et la surface de réflexion de sortie (8), sur une autre plaque acrylique transparente incolore.

5. Le dispositif d'éclairage d'échantillon à réflexion interne totale (1) selon l'une quelconque des Revendications 1 à 4, dans lequel l'indice de réfraction du matériau constituant le substrat de dispositif (4) est le même que l'indice de réfraction de la lame de verre (2).
